# EUROPÄISCHE PATENTANMELDUNG

(11) **EP 0 758 773 A1**
(43) Veröffentlichungstag der Anmeldung: **19.02.1997**
(21) Anmeldenummer: 95112584.8
(22) Anmeldetag: 10.08.1995
(51) Int. Cl.: G06F 17/60

(54) **Verfahren zur rechnergestützten Erstellung einer Konstruktion eines Gebäudeteils**

(71) Anmelder: PROMAT GmbH, 40880 Ratingen (DE)
(72) Erfinder: Noll, Hans-Werner, c/o Promat GmbH, D-40880 Ratingen (DE)
(74) Vertreter: Stenger, Watzke & Ring Patentanwälte

(57) **Zusammenfassung**

Auf einer CD-ROM als Datenträger sind die Technik-Systeme, Konstruktionen und Produkte des Gebäudebrandschutzes gespeichert und mittels eines Programms miteinander verknüpft, um unter Berücksichtigung baurechtlicher und normenrechtlicher Vorschriften sowie der Landesbauordnungen und Vorschriften für Sonderbauten passende Brandschutzkonstruktionen in einfacher Weise rechnergestützt erstellen zu können. Ausschreibungs- und Kalkulationsmodule ermöglichen die Auswertung und betriebswirtschaftliche Verwendung.

## Beschreibung

Die Erfindung betrifft ein Verfahren zur rechnergestützten Auswahl und/oder Erstellung einer Konstruktion eines Gebäudeteils, insbesondere einer Brandschutzkonstruktion, unter Berücksichtigung bestehender Baurechtsvorschriften und Baunormen einschließlich der interaktiven Erstellung von Ausschreibungstexten und Kalkulationen.

Bei der Durchführung von Brandschutzkonstruktionen hat der Konstrukteur eine Vielzahl von technischen und rechtlichen Kriterien zu berücksichtigen, um eine zulässige, den Brandschutzbestimmungen genügende und damit genehmigungsfähige Lösung zu entwickeln. Brandschutzverglasungen beispielsweise dienen der Vermeidung des Durchtritts von Feuer- und Rauch im Brandfall aus einem Raum in einen anderen unter Verwendung von Brandschutzscheiben mit einem darin enthaltenen, im Brandfall unter Kühlwirkung aufschäumenden und hierbei teilweise aus den Stirnflächen der Brandschutzscheiben austretenden Schutzwirkstoff, sowie mit einer die Brandschutzscheiben seitlich haltenden Stützkonstruktion, die selbst keine Schutzmaßnahmen gegen Feuer und Hitze aufweist.

Derartige Brandschutzverglasungen sind hinsichtlich ihrer Eigenschaften in DIN 4102, Teil 13, bezüglich der Feuerwiderstandsklasse F sowie G genormt und beschrieben und hinsichtlich ihrer Anforderungen erläutert. Der Konstrukteur hat zunächst die aus Profilen zusammengesetzte Haltekonstruktion nach ihrer Größe und hinsichtlich ihrer brandschutztechnischen Eigenschaften auf die zur Verwendung vorgesehene Brandschutzverglasung abzustimmen. Dazu sind die Stahlhohlprofile nach Festigkeit und Abmessungen sowie Abdeckung durch Streifen aus nicht brennbarem bzw. schwer entflammbarem Material auszuwählen, um im Brandfall eine Beschädigung sowie ein Durchschlagen der Flammen im Bereich der Stoßfläche zu vermeiden. Alternativ kann der Konstrukteur auch eine Brandschutzverglasungs-Konstruktion mit unverkleideten Stahlhohlprofilen vorsehen, wenn er konstruktiv sicherstellt, daß die Stoßflächen der einzelnen Brandschutzscheiben unter Bildung lediglich einer schmalen Fuge den Stoßflächen der benachbarten Brandschutzscheiben gegenüberliegen. Im Brandfall tritt der in den Brandschutzscheiben enthaltene Schutzwirkstoff aus diesen Stoßflächen aus und verschließt die Fuge feuer- und rauchdicht.

Ferner hat der Konstrukteur zu berücksichtigen, daß sich die Brandschutzverglasung im Brandfall sehr stark zum Brandherd hin wölbt. Ursache hierfür ist die starke Erhitzung und damit Ausdehnung der Stahlhohlprofile auf der Seite des Brandherdes. Thermische Verspannungen der Brandschutzverglasung treten daher auf, welche konstruktiv berücksichtigt und aufgefangen werden müssen.

Über diese rein technischen Konstruktionsparameter hinaus hat der Konstrukteur bei der Erstellung einer Brandschutzkonstruktion die nach Bundesland, Brandschutzklasse und Gebäudetyp unterschiedlichen baurechtlichen Bestimmungen in den einzelnen Bundesländern zu berücksichtigen und mit den Konstruktionsdaten zu verknüpfen. Er hat sich ferner über den Verlauf von Brandschutzversuchen an bekannten Konstruktionen zu unterrichten, um die daraus resultierenden Erkenntnisse in die Neukonstruktion einfließen zu lassen.

Der Erfindung liegt demgegenüber die **Aufgabe** zugrunde, ein vereinfachtes Verfahren zur rechnergestützten Erstellung einer Konstruktion eines Gebäudeteils, insbesondere einer Brandschutzkonstruktion, vorzuschlagen, mit der optimierte technische Ergebnisse in einfacher Weise erzielbar sind.

Die Aufgabe ist erfindungsgemäß dadurch gelöst, daß alle technischen Daten zu den Konstruktionselementen, insbesondere Brandschutzelementen, Bauordnungen, Rechtsvorschriften und Normen sowie Verlauf und Ergebnisse von Zulassungsprüfungen, insbesondere in Form von Videos und Fotos sowie Ausschreibungs- und Kalkulationsunterlagen auf einem Datenträger, insbesondere einer CD-ROM, einer elektronischen Datenverarbeitungsanlage in vorbestimmter Weise geordnet und miteinander verknüpft gespeichert werden, daß sodann unter Verwendung des Datenträgers auf die technischen Daten der Konstruktionselemente des zu erstellenden Gebäudeteils zugegriffen wird und über eine Auswahl der für die zu erstellende Konstruktion relevanten technisch-konstruktiven Merkmale und Rahmenbedingungen, wie der gewünschten Feuerschutzklasse der Brandschutzkonstruktion, aus den gespeicherten Konstruktionsvorgaben eine passende Konstruktion rechnergestützt ausgewählt und/oder erstellt wird und hierzu in einem weiteren Verfahrensschritt eine Baurechtsprüfung und eine Baunormenprüfung für die erstellte Konstruktion durch Datenverknüpfung durchgeführt wird.

Dem Konstrukteur ist hiermit ein Verfahren zur Hand gegeben, insbesondere mit Hilfe einer CD-ROM als Datenträger eine Konstruktion des bautechnischen Brandschutzes rechnergestützt in einfacher Weise aus gespeicherten Konstruktionslösungen auszuwählen, indem durch sinnvolle Verknüpfung der auf der CD-ROM enthaltenen Daten Sprünge zu kontextbezogenen Themen ebenso wie der Aufruf der zur Verfügung stehenden Ausgabe-Funktionen ermöglicht sind. Die Übertragung von Baurechtsvorschriften und Normeninhalten, Zeichnungen, Produkteigenschaften und dgl. in die Konstruktionserstellung bzw. -wahl ist in einfacher Weise durchführbar, womit die technischen Arbeiten wesentlich erleichtert werden.

Vorzugsweise sind auf den Datenträger die technischen Daten bereits erstellter Vergleichskonstruktionen integriert und als Video, Graphik, Foto und/oder Audiorepräsentation darstellbar sind und werden diese interaktiv in die Auswahl und/oder Erstellung einer neuen Konstruktion einbezogen. Zusätzlich können Daten zur Kalkulation der Konstruktion integriert werden und interaktiv zur Erstellung von Ausschreibungen und Bestellungen verwendet werden.

Vorzugsweise sind die technischen Daten gegliedert in übergeordnete Systeme, nämlich Stahltragwerke, Massivdecken, Flucht- und Rettungswege, Holzkonstruktionen, Trapezblechdächer, Wände, Lüftungsanlagen, Dehnungsfugen, Verglasungen, Elektroanlagen und Abschottungen und sind zu den Systemen Produkt- und Materialdaten der zugehörigen Konstruktionselemente aufrufbar, welche mit Graphikfenstern und Textfenstern auf dem Bildschirm der EDV-Anlage darstellbar sind und rechnerisch miteinander verknüpft sind, wobei über eine Benutzeroberfläche eine Datenauswahl zur rechnergestützten Verwertung bei der Konstruktionserstellung interaktiv durchgeführt wird.

Zusätzlich und in wahlweiser Verknüpfung mit dem Rechner sind Dateien mit Adressen, Landesbauordnungen und Vorschriften für Sonderbauten vorgesehen, die in die Konstruktionserstellung elektronisch einbeziehbar sind. Dabei wird über eine Suchmaske mit verschieden belegten Feldern nach Stichwort, Volltext, Suchgebiet, Land/Gericht/Behörde, Konstruktionsart oder Systemen die Datenverknüpfung vorgenommen und mit den konstruktiven Parametern verknüpft.

Weitere Einzelheiten, Merkmale und Vorteile des Gegenstandes der Erfindung ergeben sich aus der nachfolgenden Beschreibung der zugehörigen Zeichnung, in der schematisch die Verfahrensweise der Erfindung dargestellt ist. In der Zeichnung zeigt:
- Fig. 1: eine schematische Struktur der Elemente zur rechnergestützten Konstruktion eines Bauteils mit den einzelnen Modulen,
- Fig. 2: eine schematische Darstellung der technischen Systeme, insbesondere Bildschirmdarstellung,
- Fig. 3: die Darstellung einer beispielsweise aus einem Technik-System gewählten Konstruktions-Gruppe und ihre Verknüpfung mit dem Produktmodul, wobei
- Fig. 4: eine Einzelbildschirmdarstellung zu der Konstruktion "Stahlunterzüge" des Systems "Stahltragwerke" und
- Fig. 5: eine Bildschirmdarstellung zu dem in der Konstruktion verwendeten Produkt zeigen.

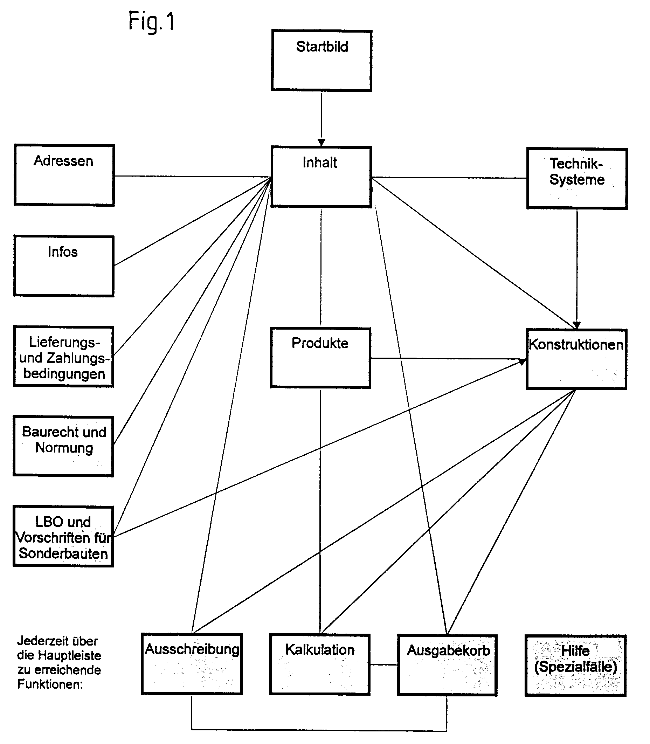

Die in Fig. 1 der Zeichnung dargestellte schematische Struktur stellt den Dateninhalt der auf einer CD-ROM gespeicherten modular abgelegten und miteinander verknüpften Informationen dar, die den "Inhalt" der CD-ROM verdeutlichen. Die Fig. 1 erscheint unmittelbar nach dem Start des Programms auf einem Rechner als Startbild und stellt das eigentliche Hauptmenue des Programms dar. Die einzelnen Module repräsentieren die Auswahlmöglichkeiten, die in Form von Schaltflächen über eine Maussteuerung aufrufbar sind (Sprungziel). Im einzelnen weist die CD-ROM gemäß Fig. 1 der Zeichnung gespeicherte Daten auf zu den Modulen
Technik-Systeme
Konstruktionen
Produkte
Adressen
Infos
Baurecht und Normung
Landesbauordnungen und Vorschriften für Sonderbauten
Lieferungs- und Zahlungsbedingungen

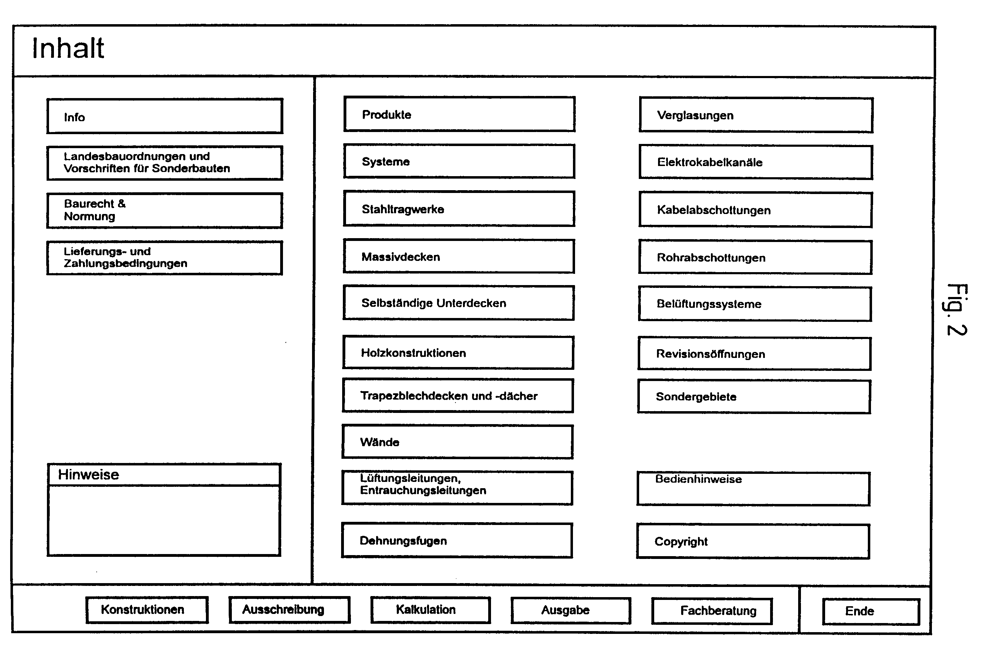

Die Technik-Systeme als Modul enthalten gemäß der in Fig. 2 der Zeichnung dargestellten Übersicht sämtliche technischen Informationen über Stahltragwerke, Massivdecken, Flucht- und Rettungswege, Holzkonstruktionen, Trapezblechdächer, Wände, Lüftungsanlagen, Dehnungsfugen, Verglasungen, Elektroanlagen, Abschottungen sowie Sondergebiete, die über die Maussteuerung des Rechners einzeln aufrufbar sind. Dabei ist nach Aufruf des Bildschirms eine Gebäude-Schnittzeichnung sichtbar, in der die im Gebäude installierten Brandschutzsysteme hervorgehoben dargestellt sind. Auf der Tafel "Hinweis" gemäß Fig. 2 der Zeichnung werden die Bezeichnungen der vorhandenen Systeme nacheinander in Form einer Laufschrift angezeigt. Bewegt sich der Konstrukteur mit dem Mauszeiger auf eines der im Gebäude dargestellten Systeme, so wird die Bezeichnung dieses Systems auf der Hinweistafel angezeigt. Durch Anklicken des gewünschten Systems mit der Maus erfolgt der Sprung in den Modul "Konstruktionen" zu dem Einleitungsbildschirm der entsprechenden Konstruktion, also beispielsweise der Konstruktion "Verglasungen", womit sämtliche Brandschutz-Verglasungen gemäß ihren unterschiedlichen Konstruktionen aufrufbar werden.

Der Konstrukteur befindet sich nun im Modul "Konstruktionen" gemäß der Übersicht der Fig. 1. Er wird hier umfassend über die Konstruktionen unterrichtet, in denen die Produkte des Moduls "Produkte" zur Anwendung kommen.

Nach Aufruf einer Konstruktionen-Gruppe folgt automatisch der Bildschirm "Konstruktionen-Auswahl", auf dem spezielle Kriterien in sogenannten Filtermasken zur Spezifizierung der gewünschten Konstruktion vom Konstrukteur angegeben werden können. Nach Auswahl der gewünschten Filter erscheint der Bildschirm der ersten Konstruktion, mit dem Hinweis, daß eine bestimmte Anzahl von Konstruktionen gefunden wurde und daß man durch Blättern zu den gefundenen Konstruktionen gelangen kann.

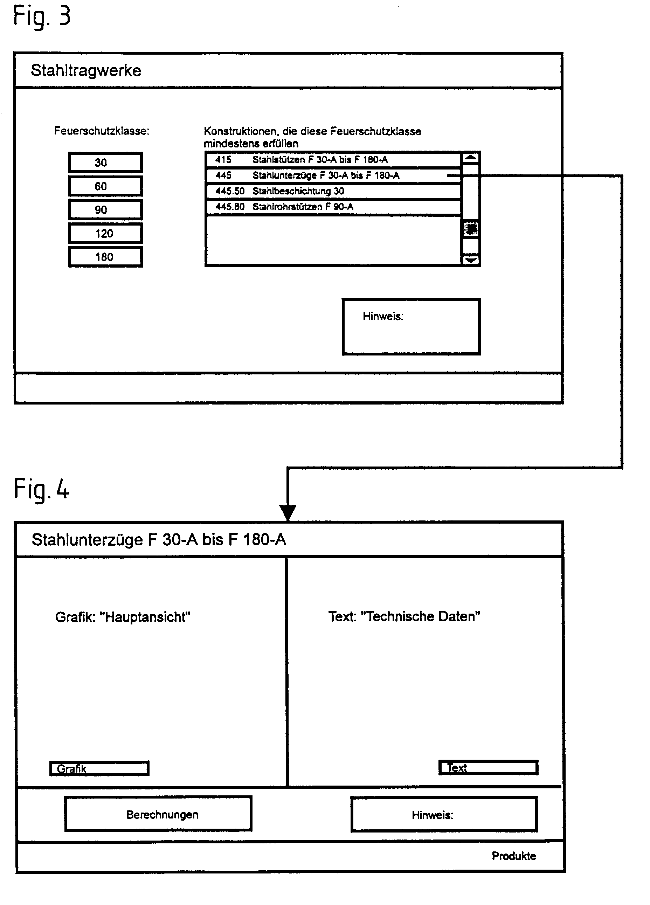

Der sich dabei einstellende Konstruktions-Bildschirm dient der Darstellung der vom Konstrukteur gewählten Konstruktion. Er besteht aus drei Fenstern gemäß Fig. 4 der Zeichnung, welche als Beispiel einen Bildschirm für Stahlunterzüge F30-A bis F180-A zeigt.

### Graphikfenster:

Dieser Teil dient zur Darstellung der Graphiken. Zu jedem Produkt existieren eine Hauptansicht und mehrere Detailzeichnungen, die hier dargestellt werden können. Durch Betätigen der Schaltfläche "Graphik", die sich innerhalb des Graphik-Fensters befindet, wird eine Auswahlliste sichtbar, in der die gewünschte Graphik ausgewählt werden kann.

### Textfenster:

Dieser Teil dient zur Darstellung der zu den Graphiken gehörenden Texte. Zu jedem Produkt existieren ein Textabschnitt "technische Daten" und Erläuterungen zu den Detailzeichnungen, die hier dargestellt werden. Durch Betätigen der Schaltfläche "Text", die sich innerhalb des Text-Fensters befindet, wird eine Auswahlliste sichtbar, in der der gewünschte Text ausgewählt werden kann.

### Fenster "Berechnungen":

Hier sind Berechnunsfunktionen verfügbar, wie beispielsweise Hinweise zur U-A-Wert-Berechnung oder zur Berechnung von Bekleidungsdicken von Stahltragwerken und dergleichen.

Darüber hinaus ist noch ein Zusatzfenster in Fig. 4 der Zeichnung mit der Beschriftung "Hinweis" erkennbar. Hier befindet sich eine weitere Schaltfläche, über die eventuell vorhandene Zusatzfunktionen aufgerufen werden können. Bei Aufruf dieser Schaltfläche erscheint eine Auswahlliste, aus der die gewünschte Funktion ausgewählt werden kann.

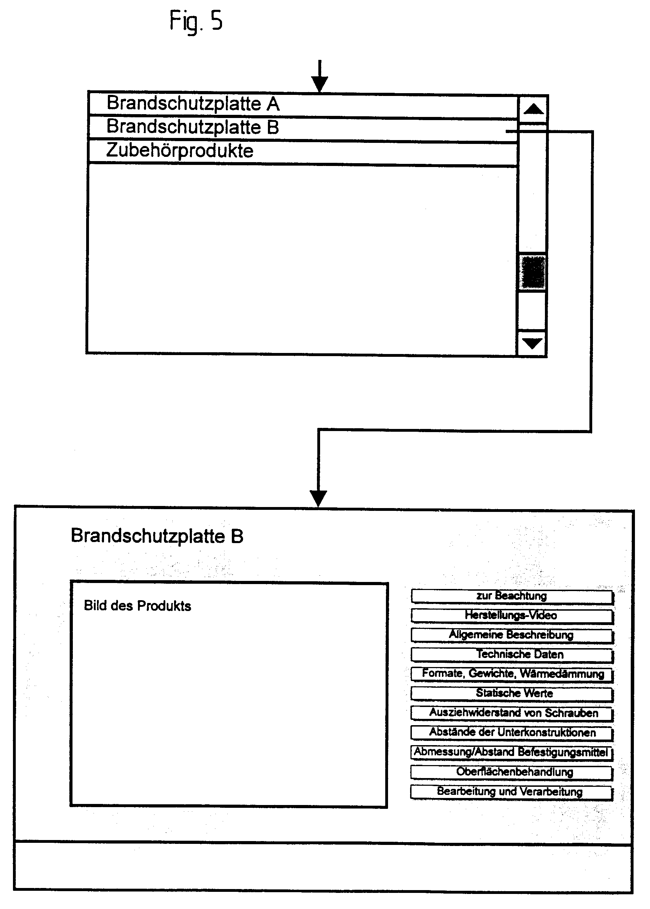

Die Verknüpfungslinien mit Pfeil zeigen die rechnerische Datenverknüpfung der Technik-Systeme gemäß Fig. 3 der Zeichnung mit den zugehörigen Konstruktionen gemäß Fig. 4 der Zeichnung und den dort verwendeten Produkten gemäß Fig. 5 der Zeichnung.

In dem Modul "Info" gemäß Fig. 1 der Zeichnung findet der Konstrukteur eine multimediale Präsentation mit Video, Audio und Fotos bzw. Graphiken, die beispielsweise zu bestimmten Konstruktionen durchgeführte Brandschutzversuche im Rahmen von behördlichen Zulassungen enthalten.

Der Modul "Adressen" ermöglicht den Zugriff auf Geschäftsadressen, wie beispielsweise Niederlassungen, Auslieferungsläger, Konstruktionsbüros und dgl. im In- und Ausland.

Zwei weitere wesentliche Module sind die zu "Baurecht und Normung" sowie den "Landesbauordnungen und Vorschriften für Sonderbauten", ohne deren Hilfe der Konstrukteur eine zulassungsfähige Brandschutzkonstruktion nicht erstellen kann. Dabei beinhaltet der Modul "Baurecht und Normung" Texte über Baurecht sowie Normen, wobei bei Aufruf dieses Bildschirms zunächst das geöffnete Textfenster mit dem Inhalt des Textes über Baurecht und Normung erscheint. Nach Auswahl des gewünschten Punktes verschwindet dieses Textfenster und der eigentliche ausgewählte Text wird sichtbar. Mit Hilfe von Bildlaufleisten ist es möglich, durch den gesamten Text zu blättern. Weitere Schaltflächen sind vorgesehen, um "Inhalte" oder "Bilder" bei Betätigung aufzurufen. Dies gilt in vergleichbarer Weise für den Modul "Landesbauordnungen und Vorschriften für Sonderbauten".

In dem Modul "Produkte" ist für jedes verfügbare Produkt ein entsprechender Bildschirm aufrufbar. Fig. 5 der Zeichnung zeigt dies am Beispiel des Produktes "Promatect" (registrierte Marke der Anmelder) als Beispiel. Dabei wird ein Bild des Produktes in einem Fenster angezeigt und werden daneben im Textfenster technische Merkmale in Form einer Auswahlliste angezeigt. Zu dem in der Zeichnung gemäß Fig. 5 aufgerufenen Promatect-Produkt ist abrufbar: Ein Video über die Herstellung des Produktes, eine allgemeine Beschreibung, sämtliche technischen Daten, die Formate, Gewichte und die Wärmedämm-Eigenschaften, die statischen Werte des Produktes, der Ausziehwiderstand von Schrauben, die Abstände der Unterkonstruktionen, die Abmessungen und der Abstand der Befestigungsmittel, die Oberflächenbehandlung und Informationen zu Bearbeitung und Verarbeitung.

Von jedem Produkt kann wiederum zu dem Modul "Konstruktionen" gesprungen werden, in denen das Produkt zur Anwendung kommt. Hierzu erscheint bei Betätigung der Schaltfläche "Konstruktionen" eine Auswahlliste der entsprechenden Konstruktionen, die der Konstrukteur benutzen kann.

Gemäß Fig. 1 der Zeichnung sind auf der CD-ROM die weiteren Programmteile "Ausschreibung", "Kalkulation", "Ausgabekorb" und "Hilfe" untergebracht. Dabei dient der Programmteil "Ausschreibung" zur Erstellung von Ausschreibungstexten und zum Zusammenfügen mehrerer Ausschreibungstexte zu einer Ausschreibung. Es ist möglich, den Modul "Ausschreibung" von einem Konstruktions-Bildschirm aus aufzurufen, wonach im Bildschirm der zur jeweiligen Konstruktion gehörende Ausschreibungstext zur Bearbeitung angeboten wird. Hierbei können vom Konstrukteur die konstruktionsspezifischen Daten automatisch in den Ausschreibungstext übernommen werden oder eigene Werte eingetragen werden.

Wenn der Programmteil "Ausschreibung" nicht von einem Konstruktions-Bildschirm aus aufgerufen wird, hat der Anwender die Möglichkeit, über eine entsprechende Schaltfläche einen beliebigen Ausschreibungstext aus einer Textliste auszuwählen und zu bearbeiten.

Der Programmteil "Kalkulation" dient zur Erstellung einer Objekt-Kalkulation. Wird er von einem Konstruktions-Bildschirm aus aufgerufen, werden die Daten über die benötigten Materialien und Mengen und automatisch in die Objekt-Kalkulation übernommen. Hierzu existiert zu jeder Konstruktion ein spezieller Datensatz, der diese Angaben enthält.

Die auf diese Weise erstellten Ausschreibungstexte und/oder Kalkulationen können über den Programmteil "Ausgabekorb" zum Ausdruck oder zum Versenden als Fax weiterverarbeitet werden.

## Patentansprüche

1. Verfahren zur rechnergestützten Auswahl und/oder Erstellung einer Konstruktion eines Gebäudeteils, insbesondere einer Brandschutzkonstruktion, unter Berücksichtigung bestehender Baurechtsvorschriften und Baunormen einschließlich der interaktiven Erstellung von Ausschreibungstexten und Kalkulationen,
**gekennzeichnet dadurch**,
daß alle technischen Daten zu den Konstruktionselementen, insbesondere Brandschutzelementen, Bauordnungen, Rechtsvorschriften und Normen sowie Verlauf und Ergebnisse von Zulassungsprüfungen, insbesondere in Form von Videos und Fotos sowie Ausschreibungs- und Kalkulationsunterlagen auf einem Datenträger, insbesondere einer CD-ROM, einer elektronischen Datenverarbeitungsanlage in vorbestimmter Weise geordnet und miteinander verknüpft gespeichert werden, daß sodann unter Verwendung des Datenträgers auf die technischen Daten der Konstruktionselemente des zu erstellenden Gebäudeteils zugegriffen wird und über eine Auswahl der für die zu erstellenden Konstruktion relevanten technisch-konstruktiven Merkmale und Rahmenbedingungen, wie der gewünschten Feuerschutzklasse der Brandschutzkonstruktion, aus den gespeicherten Konstruktionsvorgaben eine passende Konstruktion rechnergestützt ausgewählt und/oder erstellt wird und hierzu in einem weiteren Verfahrensschritt eine Baurechtsprüfung und eine Baunormenprüfung für die erstellte Konstruktion durch Datenverknüpfung durchgeführt wird.

2. Verfahren nach Anspruch 1, dadurch gekennzeichnet, daß auf den Datenträger die technischen Daten bereits erstellter Vergleichskonstruktionen integriert und als Video, Graphik, Fotos und Audiorepräsentation darstellbar sind und daß diese interaktiv in die Auswahl und/oder Erstellung einer neuen Konstruktion vom Anwender einbeziehbar sind.

3. Verfahren nach Anspruch 1 und 2, dadurch gekennzeichnet, daß die technischen Daten gegliedert werden in übergeordnete Systeme, nämlich Stahltragwerke, Massivdecken, Flucht- und Rettungswege, Holzkonstruktionen, Trapezblechdächer, Wände, Lüftungsanlagen, Dehnungsfugen, Verglasungen, Elektroanlagen und Abschottungen und daß zu den Systemen Produkt- und Materialdaten der zugehörigen Konstruktionselemente aufrufbar sind, welche mit Graphikfenster und Textfenster auf dem Bildschirm der Datenverarbeitungsanlage darstellbar und rechnerisch miteinander verknüpft sind, wobei über eine Benutzeroberfläche eine Datenauswahl zur rechnergestützten Verwertung bei der Konstruktionserstellung interaktiv durchgeführt wird.

4. Verfahren nach einem der Ansprüche 1 bis 3, dadurch gekennzeichnet, daß zusätzlich und in wahlweiser Verknüpfung mit dem Rechner Dateien für Adressen, Landesbauordnungen und Vorschriften für Sonderbauten auf dem Datenträger vorgesehen sind, die in die Konstruktionserstellung elektronisch einbeziehbar sind.
